# EUROPEAN PATENT APPLICATION

(11) **EP 4 494 843 A1**
(43) Date of publication of application: **22.01.2025**
(21) Application number: 23190734.6
(22) Date of filing: 10.08.2023
(51) Int. Cl.: B29C 51/00, C08L 53/02, C08L 67/02, B32B 27/08

(54) **GRAIN RETENTION POLYMER COMPOSITION AND SHEET**

(30) Priority: 19.07.2023 PT 2023118825
(71) Applicant: TMG - Tecidos Plastificados e Outros Revestimentos para a Indústria Automóvel, S.A., 4770-583 São Cosme do Vale (PT)
(72) Inventor: DO VALE MELO, David Emmanuel, 4770-583 São Cosme Vale (PT); DE ARAÚJO MESQUITA DA SILVEIRA, Gonçalo Campos, 4770-583 São Cosme Vale (PT)
(74) Representative: Strehl Schübel-Hopf & Partner

(57) **Abstract**

A composition containing polymers, having a gel content of less than 30 %, and having at least one of the following properties (a) to (c) in a test according to ISO 6721-10:2015 at 130 °C: (a) the tanδ is less than 0.35, (b) the maximum creep deformation is less than 5 %, (c) the slope of the creep is less than 0.0080 in the plateau at 100 to 300 s; a sheet consisting of a foil or comprising the foil, wherein the foil is made of the composition; a process of producing an embossed and thermoformed sheet; the use of a sheet as a surface material in the interior of a vehicle.

## Description

### Field of the invention

The present invention relates to a polymer composition, a sheet containing or consisting of a foil made of the composition, a process of producing an embossed and thermoformed sheet, and the use of the sheet in automotive interiors.

### Background art

DE 10 356 665 A1 discloses a process for producing an embossed and thermoformed foil comprising a step of embossing a foil to form a grained structure, a step of treating the foil with electron beams, and a subsequent step of thermoforming the foil.

EP 3 044 251 A1 discloses a process for producing an embossed and thermoformed foil comprising a step of embossing a foil, a step of providing a high gel content in the embossed foil by treating the embossed foil with electron beams, a step of positive thermoforming the embossed foil, and a subsequent step of treating the thermoformed foil with electron beams. The embossed foil needs to have a high gel content to have sufficient grain stability during the subsequent step of positive thermoforming.

In the prior art, the treatments with electron beams to form covalent crosslinks between the polymers contained in the foil are necessary to achieve sufficient grain stability of the embossed structure.

### Problem to be solved by the invention

The deep-drawn foils of the prior art essentially require an irradiation treatment to have the desired properties such as grain stability. The polymers in the foil are covalently crosslinked by the irradiation treatment, which renders the foil disadvantageous in terms of recyclability. Furthermore, the physical properties of the foils may be disadvantageously affected by the covalent crosslinks.

Therefore, the problem underlying the present invention is to provide a polymer composition and a thermoformed sheet showing facilitated processability and recyclability as well as an excellent balance of physical properties such as grain stability, elasticity, and flexibility.

### Summary of the invention

The problem underlying the present invention is solved by providing a composition that is based on elastomers having the desired properties without requiring an additional crosslinking treatment.

The present application covers the following aspects.
[1] A composition containing polymers, having a gel content of less than 30 %, and having at least one of the following properties (a) to (c) in a test according to ISO 6721-10:2015 at 130 °C: (a) the tanδ is less than 0.35; (b) the maximum creep deformation is less than 5 %; (c) the slope of the creep is less than 0.0080 in the plateau at 100 to 300 s.
   [1-1] The composition according to aspect [1], wherein an embossed foil made of the composition is suitable for use in positive thermoforming.
   [1-2] The composition according to any of the preceding aspects, wherein the gel content of the composition is less than 20 %.
   [1-3] The composition according to any of the preceding aspects, wherein the composition has properties (a) and (b).
   [1-4] The composition according to any of the preceding aspects, wherein the composition has properties (a) to (c).
   [1-5] The composition according to any of the preceding aspects, wherein the elongation of a foil made of the composition is at least 100 % at 130 °C, wherein the stretch in the molded part is done experimentally by printing a grid on the surface of the material, and the final stretch is evaluated by measuring the elongation of the grid in specific areas.
   [1-6] The composition according to any of the preceding aspects, wherein the composition is elastomeric and thermoplastic.
   [1-7] The composition according to any of the preceding aspects, wherein the composition is thermoformable at a thermoforming temperature in the range of 120 °C to 150 °C.
   [1-8] The composition according to any of the preceding aspects, wherein the composition is thermoformable at 130 °C.
   [1-10] The composition according to any of the preceding aspects, wherein the composition has at least one of following properties (a) to (c) at 130 °C compared with 150 °C in a test according to ISO 6721-10:2015: (a) the tanδ is lower; (b) the maximum creep deformation is lower; (c) the slope of the creep in the plateau at 100 to 300 s is lower.
   [1-11] The composition according to any of the preceding aspects, wherein the composition shows improved grain retention at 130 °C compared with 150 °C.
[2] The composition according to any of the preceding aspects, wherein the polymers are copolymers or a blend of polymers or copolymers.
   [2-1] The composition according to aspect [2], wherein the copolymers have a crystallinity of up to 80 %, preferably 10 to 50 %, as determined according to ASTM D3418-15.
   [2-2] The composition according to aspect [2] or [2-1], wherein the copolymers contain hard, crystalline segments and soft, amorphous segments, wherein the crystallinity of the copolymers is up to 80 %, preferably 10 to 80 %, more preferably 20 to 80 %, as determined according to ASTM D3418-15.
[3] The composition according to any of the preceding aspects, wherein the polymers are a blend of a styrene-based elastomer and a thermoplastic olefin forming an interpenetrating polymer network.
   [3-1] The composition according to aspect [3], wherein the styrene-based elastomer is polystyrene-block-poly(ethylene-butylene)-block-polystyrene (SEBS).
   [3-2] The composition according to aspect [3] or [3-1], wherein the composition contains (a) 30 to 70 parts by mass of the styrene-based elastomer, (b) 20 to 50 parts by mass of the thermoplastic olefin, and (c) 10 to 30 parts by mass of oil, wherein (a) to (c) add up to 100 parts by mass.
   [3-3] The composition according to aspect [3-2], wherein the styrene content in (a) is 20 to 50 mass%.
   [3-4] The composition according to any of aspects [3] to [3-3], wherein the polymers forming the interpenetrating polymer network are at least partially interlaced on a molecular scale but not covalently bonded to each other and cannot be separated unless chemical bonds are broken.
   [3-5] The composition according to any of aspects [3] to [3-4], having the interpenetrating polymer network before and after thermoforming the composition at 130 °C.
   [3-6] The composition according to a combination of aspect [2-1] with any of aspects [3] to [3-5].
[4] The composition according to any of aspects [1] to [2-2], wherein the polymers are polyester-based multiblock copolymers containing hard segments and soft segments.
   [4-1] The composition according to aspect [4], wherein the hard segments are short-chain ester units, and the soft segments are derived from aliphatic polyether and polyester glycols.
   [4-2] The composition according to aspect [4] or [4-1], wherein the polyester-based multiblock copolymers contain alternating hard segments and soft segments.
   [4-3] The composition according to a combination of aspect [2-2] with any of aspects [4] to [4-2].
[5] A sheet consisting of a foil or comprising the foil, wherein the foil is made of the composition as described in any of aspects [1] to [4-3] and has a gel content of less than 30 %.
   [5-1] The sheet according to aspect [5], wherein the sheet is suitable for use in positive thermoforming.
   [5-2] The sheet according to aspect [5] or [5-1], wherein the foil is a multi-layered structure.
   [5-3] The sheet according to any of aspects [5] to [5-2], wherein the foil has a thickness of 100 µm to 3 mm.
[6] The sheet according to any of aspects [5] to [5-3], wherein the sheet is a composite structure comprising the foil as a cover layer and having at least one additional layer selected from a base layer arranged at the B-side of the cover layer and a lacquer layer coated on the A-side of the cover layer.
   [6-1] The sheet according to aspect [6], wherein the A-side of the cover layer or the lacquer layer is the topside of the sheet.
   [6-2] The sheet according to aspect [6] or [6-1], wherein the cover layer has a thickness of 100 µm to 3 mm, preferably 200 µm to 1.5 mm.
   [6-3] The sheet according to any of aspects [6] to [6-2], wherein the cover layer is a multi-layered structure.
   [6-4] The sheet according to any of aspects [6] to [6-3], wherein the base layer is directly attached to the B-side of the cover layer, or an intermediate layer is arranged between the base layer and the cover layer.
   [6-5] The sheet according to any of aspects [6] to [6-4], wherein the base layer is directly attached to the B-side of the cover layer by thermal bonding.
   [6-6] The sheet according to any of aspects [6] to [6-4], wherein the base layer is a foam layer.
   [6-7] The sheet according to any of aspects [6] to [6-5], wherein the cover layer is made of a polyester-based multiblock copolymers, the intermediate layer is made of an acrylic polymer, and the foam layer is made of polyolefin.
[7] The sheet according to aspect [5] or [6], wherein the sheet is an embossed sheet.
   [7-1] The sheet according to aspect [7], wherein the A-side of the composite structure is embossed.
   [7-2] The sheet according to aspect [7] or [7-1], wherein the surface of the embossed sheet has a grain.
   [7-3] The sheet according to aspect [7-2], wherein the grain has grain depth of 10 to 500 µm, preferably 20 to 200 µm.
   [7-4] The sheet according to a combination of aspects [5-3] and [7-3].
[8] The sheet according to any of aspects [5] to [7-4], wherein the sheet is an embossed sheet processed by positive thermoforming.
[9] The sheet according to aspect [8], wherein the sheet has not undergone a crosslinking treatment.
   [9-1] The sheet according to any of aspects [5] to [9], wherein the sheet is a composite structure and the cover layer and the base layer are bonded to each other by thermal bonding.
[10] A process of producing an embossed and thermoformed sheet, comprising the steps of (i) providing the sheet as described in any one of aspects [5] to [6-7], (ii) embossing the sheet to obtain an embossed sheet, and (iii) positive thermoforming the embossed sheet.
   [10-1] The process according to aspect [10], wherein the process does not comprise a crosslinking treatment.
   [10-2] The process according to aspect [10] or [10-1], wherein the sheet provided in step (i) and the embossed and thermoformed sheet obtained in step (iii) have the same gel content.
   [10-3] The process according to any of aspects [10] to [10-2], wherein step (iii) is a vacuum thermoforming process.
   [10-4] The process according to any of aspects [10] to [10-3], wherein step (iii) is carried out at less than 170 °C, preferably less than 140 °C.
[11] The use of a composition as described in any one of aspects [1] to [4-3] for preparing an embossed sheet for use in positive thermoforming.
[12] The use of an embossed sheet in positive thermoforming, wherein the embossed sheet consists of or comprises a foil made of a composition as described in any one of aspects [1] to [4-3].
[13] The use of a sheet according to any one of aspects [5] to [9-1] as a surface material in the interior of a vehicle.

### Advantages of the invention

The composition shows excellent properties such as rheological properties necessary for advantageous grain retention performance in thermoforming such as VTF (vacuum thermoforming). These properties allow high thermoforming stretches and at higher temperatures than the conventional uncrosslinked formulations and thus the formation of complex geometries as well as the processability in thermoforming.

Since additional covalent crosslinks are not formed, processing the material requires fewer steps. The low content or lack of covalent crosslinks allows improved recyclability.

The material is suitable for the in the interior of vehicles, for instance for airbag opening applications.

### Embodiments of the invention

Herein, the terms "the composition", "the sheet", and "the foil" refer to "the composition according to the present invention", "the sheet according to the present invention", and "the foil made of the composition and contained in or constituting the sheet of the present invention", respectively, unless explicitly stated otherwise.

When referring to the composition containing polymers, the term "the polymers" used herein means "the polymers contained in the composition", in other words, all polymers contained in the composition.

The sheet of the present invention may consist of a foil or contain the foil as a cover layer. A base layer may be arranged at the B-side and a cover layer, and a lacquer layer may be arranged at the A-side of the cover layer. Herein, the terms "A-side" and "B-side" either refer to the sheet as a whole or the individual layer such as the cover layer. The layers are layered on each other either directly, i.e., the A-side of the base layer contacts the B-side of the cover layer without any material such as an adhesive disposed between them, or indirectly, i.e., having layer(s) or an adhesive disposed between them. The cover layer may optionally be coated with a lacquer layer. Additional layers or structures may be arranged at the B-side of the base layer.

Whenever it is mentioned in the context of this description that individual components or elements are based on or made of a certain material, this should be interpreted as the respective material forming the main constituent of the component, wherein other constituents may also be present in small quantities. In embodiments, the terms "based on" or "made of" a certain material means a content of more than 50 % by weight, preferably 90 % by weight, and more preferably 95 % by weight.

As used herein, the singular forms "a," "an," and "the" may be intended to include the plural forms as well, unless the context clearly indicates otherwise. For instance, structural elements and components are generally described in the singular form, e.g. "a" base layer or forming "an" interpenetrating polymer network. Such singular form formulations are meant to include more than one of the indicated component or structural element, unless indicated otherwise. Generally, the terms "comprises," "comprising," "including," and "having," are inclusive and therefore specify the presence of stated features, steps, elements, and/or components, but do not preclude the presence or addition of one or more other features, steps, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed. The term "and/or" includes any and all combinations of one or more of the associated listed items.

Herein, percentages (%) are percentages by mass (% by mass) unless explicitly indicated otherwise. The standards and norms mentioned refer to the latest version available at the time this application was filed, unless indicated otherwise.

### Composition

The composition is defined by containing polymers, by having a gel content of less than 30 %, and by having at least one of the properties (a) to (c) defined herein.

The composition contains or consists of polymers. Herein, the polymers may be copolymers or a blend of homopolymers or copolymers. At least 90 mass%, preferably at least 95 mass%, more preferably 100 mass% of the polymers contained in the composition do not have covalent crosslinks, i.e., chemical crosslinks. In other words, the polymers contained in the composition preferably have no covalent crosslinks. The same holds for the foil and the cover layer of the sheet containing the foil. Instead of having covalent crosslinks, the polymers used in the present invention may have physical crosslinks, which are based on intramolecular or extramolecular physical interactions such as van der Waals forces, hydrogen bonds, ionic interactions. The low degree of covalent crosslinking of the polymers is reflected by the low gel content of the composition. The gel content mentioned herein is measured according to ASTM D2765-16. A sample is weighed (initial weight) and placed in xylene for 24 hours at 180 °C, the dissolved material is separated and the weight of the remaining material is determined (final weight); gel content [%] = [(final weight)/(initial weight)] x 100 %.

An example of a polymer with few or without covalent crosslinks may be a thermoplastic elastomer (TPE). A TPE is defined as an elastomer showing thermoplastic behaviour. The term "thermoplastic" denotes polymers or polymer compositions that show thermoplastic properties, in particular thermoreversibility. A TPE can be molded and recycled by heat. Its stability is achieved by reversible physical crosslinks between domains of the thermoplastic elastomers. The stabilizing domains may be non-crystalline (as in styrene-butadiene block copolymers) or crystalline as in thermoplastic copolyesters, whose crystallinity is preferably high and may be up to 80 %, e.g., 10 to 50 %, as determined according to ASTM D3418-15. TPE materials have the potential to be recyclable since they can be molded, extruded and reused like plastics, but they have typical elastic properties of rubbers which are not recyclable owing to their thermosetting characteristics.

Generally, there are the following generic classes of TPEs (designations according to ISO 18064): Styrenic block copolymer (TPS), thermoplastic polyolefin elastomer (TPO), thermoplastic vulcanizate (TPV), thermoplastic polyurethane (TPU), thermoplastic copolyester (TPC), melt processing rubbers, and thermoplastic polyamide (TPA).

The composition may contain styrene-based elastomer, also referred to as thermoplastic styrenic elastomer (TPS), which is a styrenic block copolymer and is preferably styrene-butadiene-styrene block copolymer (SBS) or styrene-ethylene-butene-styrene block copolymer (SEBS), i.e., polystyrene-block-poly(ethylene-butylene)-block-polystyrene. TPS has soft elastomer and a hard component. TPS possesses a two-phase microstructure due to incompatibility between the polystyrene and polybutadiene blocks. With low polystyrene content, the material is elastomeric with the properties of the polybutadiene predominating. Generally, TPS offers a much wider range of properties than conventional cross-linked rubbers because the composition can vary. The content of TPS in the composition is preferably at least 50 %. In addition to TPS, the composition may contain other thermoplastic polymers such as the polyethylene polymers described below. The total content of thermoplastic polymers, i.e., TPS and thermoplastic polymers (other than TPS), in the composition is preferably at least 80 %, more preferably at least 90 %. Preferably, the total content of polymers in the composition consists of thermoplastic polymers and more preferably makes up at least 80 mass%, more preferably at least 90 mass% of the total mass of the composition.

In addition to the TPS, the composition may contain a thermoplastic polyolefin (TPO). TPO compounds are semi-crystalline materials produced from alkenes and are blends of polyolefins (such as polypropylene, polyethylene) and elastomers and/or polyolefins elastomers. Polypropylene (PP) is defined herein as polymers or copolymers whose proportion by weight of propylene is more than 50 %. Examples of TPO are blends of polyethylene (PE) and polypropylene (PP). Examples of PE are LDPE, LLDPE, HDPE, and/or UHMWPE. Low-density polyethylene (LDPE) is a thermoplastic made from the monomer ethylene. It has a density in the range of 0.910-0.940 g/cm³ and may have a melting point of about 120 °C. LDPE has a high degree of short- and long-chain branching, which means that the chains do not form crystal structures and LDPE confers isotropic properties. Linear low-density polyethylene (LLDPE) is defined by a density range of 0.915-0.925 g/cm³. It is a substantially linear polymer and is made by copolymerization of ethylene with longer-chain olefins. LLDPE confers melt strength. High-density polyethylene (HDPE) has a high density between 0.94 g/cm³ and 0.97 g/cm³. HDPE has little branching, giving it stronger intermolecular forces and tensile strength than LDPE. The difference in strength exceeds the difference in density, giving HDPE a higher specific strength. Ultra-high molecular weight polyethylene (UHMWPE) is made up of extremely long chains of polyethylene, which all align in the same direction. It derives its strength largely from the length of each individual chain. Each chain is attracted to the others with so many van der Waals forces that the whole of the inter-molecular strength is high. UHMWPE may have a high crystallinity of 30 % to 80 % and a melting point of 130 °C to 136 °C. Since UHMWPE does not contain chemical groups such as hydroxylic groups or polar groups that are susceptible to attack from aggressive agents, it is very resistant to water, most chemicals, and UV radiation.

The same effect as in the SBS block polymers may be achieved in other TPEs, which may have crystalline domains where blocks of adjacent chains co-crystallize. The stability and the crystal melting point can be varied by adjusting the block length. An example of such a TPE is TPC, which is a copolymer synthesized by modification of a polyester, for instance, by introducing other diacids and/or diols to a polyester. A specific example of a TPC is COPE described below. Optimal grain retention is achieved by selecting TPC with a very low modulus (< 6 MPa Secant modulus at 100 % strain and at 23 °C), low hardness (< 35 Shore D), and a low melting temperature (< 200 °C). The properties such as low hardness and low modulus for TPC are similar to the properties of TPO and TPV. This selection of properties enables the material to keep a desirable predominant elastic behavior (tanδ < 0.4) but with low modulus at molding temperatures (ranging from 120 °C to 150 °C) furthering its good stretchability during thermoforming processes while keeping grain definition. For example: at 120 °C, the tensile secant modulus at 100 % strain should be below 2 MPa. The suitable elastic behavior at molding temperatures is achieved by the presence of a network of microcrystallites from the hard segments, wherein the microcrystallites serve as physical crosslinks. Generally, crystalline structures are very ordered and are thus strong and rigid. The degree of crystallinity governs the properties such as tanδ and secant Modulus. Amorphous structures are characterized by a relatively low resistance to heat, toughness at low temperatures and low dimensional stability. In the present invention, the degree of crystallinity may be adjusted to achieve a desired balance of physical properties such as elasticity, flexibility, and dimensional stability. In the present invention, the degree of crystallinity can be assessed by Dynamic Mechanical Analysis (DMA) with temperature sweep (preferably) or by Differential Scanning Calorimetry (DSC) analysis according to ISO1 1357-1:2009.

Specific examples of the polymers contained in the composition of the present invention are an IPN (interpenetrating polymer network) or a COPE (copolyester; a thermoplastic polyester elastomer).

Herein, an IPN is defined as a combination of at least two kinds of polymers forming a network without covalent crosslinks between the kinds of polymers. An IPN contains physical crosslinks such as polymer entanglement and/or crystallization. The network may contain the kinds of polymers interlaced on a molecular scale such that separating the network requires breaking covalent bonds; alternatively, the network may be a blend of the kinds of polymers. In the latter case, the kinds of polymers can be separated by heating, and each kind of polymer can be recovered and recycled. In an embodiment, the polymers containing in the composition are a blend of a styrene-based elastomer and a thermoplastic olefin forming an interpenetrating polymer network. For instance, IPN contains 50 % of high molecular weight SEBS with around 30 to 35 % of PS content, 30 % of a UHMWPE and 20 % of extending oils. Instead of the UHMWPE, the IPN may contain polypropylene or LLDPE, LDPE or HDPE, where these polymers are compatible with the poly (ethylene-butylene) phase, creating a stable co-continuous interpenetrating polymer network. The extending oils can be of PO (paraffinic oil) or NO (naphthenic oil) origin, or a blend of the two types. Oils are added in the formulation for cost reduction and to ease the processing of the material during the extrusion process.

A COPE is a multiblock copolymer represented by the generalized formula (-A-B-)ₙ. Similar to other TPE materials, a COPE has hard (A) and soft (B) segments, where the crystalline hard segments are typically composed of multiple short-chain ester units and the amorphous soft segments are derived from aliphatic polyether and polyester glycols.

Preferably, the composition is thermoformable at a thermoforming temperature in the range of 120 °C to 150 °C, e.g., at 130 °C, which is lower than the temperature applied in a process of thermoforming prior art compositions. The properties (a) to (c) and the grain retention the composition of the present invention are preferably more advantageous at 130 °C compared with 150 °C. Hence, thermoforming is preferably carried out at temperatures lower than 150 °C. The properties (a) to (c) have the effect that an embossed foil made of the composition is suitable for use in positive thermoforming and shows a high degree of grain retention.

The polymer composition may contain usual additives such as plasticizers, UV stabilizers, anti-aging agent (e.g. antioxidants), blowing agents (e.g. azodicarbonamide, OBSH, sodium bicarbonate, expandable microspheres), fillers and pigments (silica, TiO₂, CaC0₃, Mg(OH)₂, carbon black, mica, kaolin, clay, coal dust, lignin, talc, BaSO₄, Al(OH)₃, ZnO, and MgO), flame retardants (e.g. antimony trioxide or zinc hydroxystannate), waxes, colorants, compatibilizers and other auxiliary substances (e.g. viscosity aids, adhesion promoters, etc.).

### Sheet

The composition of the present invention may be processed into a foil. The sheet of the present invention either consists of the foil or contains the foil.

In the case of the sheet containing the foil, the sheet is a composite structure, and the foil may be referred to as the cover layer. Herein, a description relating to a foil equally applies to the cover layer of the composite structure, unless stated otherwise. The cover layer or a lacquer layer coated on the cover layer is the uppermost layer of the sheet.

The foil may be embossed at its A-side surface. Hence, the foil may have a three-dimensionally structured surface on the top side. The embossed structure may be a grain imitating natural leather. The grain may be present in the foil only or both in the foil and the optional lacquer layer. The grain may be introduced by embossing. The depth of the grain is less than the thickness of the foil and is preferably 10 to 500 µm, more preferably 20 to 500 µm, still more preferably 20 to 200 µm. The grained sheet structure may be used as an artificial leather.

A base layer may be arranged at the B-side of the cover layer. Other layers may be arranged at the B-side of the cover layer. The base layer may be a compact layer and/or a foam layer and may be in direct contact with the cover layer. The compact layer may be made of TPO or TPV, the foam layer may be made of PE or PP. The foam layer may consist of or contain polyolefin foam, PVC foam, TPE based foams, PUR based foams and/or EVA/EMA foams. Preferably, the foam layer consists of or contains polyolefin foam such as a polypropylene foam (PP foam). Both the cover layer and the base layer may be thermoplastic and may be bonded to each other by thermal bonding.

The cover layer made of COPE may have an intermediate layer attached to its B-side surface. An intermediate layer such as ethylene acrylate layer or an acrylic base lacquer enable compatibility between the COPE layer and a PP or PE foam layer.

The sheet of the present invention may be (i) an unprocessed sheet, i.e., a sheet that has not undergone embossing and positive thermoforming, (ii) an embossed sheet that has not undergone positive thermoforming, or (iii) an embossed sheet processed by positive thermoforming.

The composition and thus the sheet is thermoformable at temperatures preferably in the range of 120 °C to 150 °C. Hence, the composition starts transforming from the solid state into a molten state at a temperature lower than the thermoforming temperature but is not fully in the molten state at the thermoforming temperature.

Thermoforming is a process comprising heating a thermoplastic foil to a pliable temperature, forming and stretching the foil to a specific shape using a mold, and cooling the shaped foil to obtain the thermoformed foil. In vacuum thermoforming (VTF), vacuum pressure is applied to form the foil to the specific shape. After thermoforming, the sheet is not planar, but has a deformation, e.g., a curvature, wherein the deformed part of the sheet has been stretched in comparison to the non-deformed part. Generally, a substrate can be thermoformed by positive or negative thermoforming. The substrate is pulled over a convex mold in positive thermoforming, whereas it is forced into a concave mold in negative thermoforming. The sheet of the present invention may be processed by positive thermoforming.

The composition may contain crosslinked polymers resulting in gel content of less than 30 %. In a preferred embodiment, the sheet has not undergone a crosslinking treatment, in particular, the sheet has not undergone a crosslinking treatment during or after embossing and has not undergone a crosslinking treatment during or after positive thermoforming. In other words, the degree of crosslinking of the composition is not increased at any stage of the processing of the sheet in this preferred embodiment, and the composition with its original degree of crosslinking could be recovered from the sheet. Herein, the term "crosslinking treatment" refers to a crosslinking treatment, i.e., a treatment for forming covalent crosslinks, unless explicitly stated otherwise. A crosslinking treatment may be carried out by irradiation with electron beams. Due to the absence of additional covalent crosslinks in the processed sheet, the gel content is the same as in the starting material composition, the deformation caused by embossing and positive thermoforming is reversible, and the material is recyclable. In addition, the properties of the sheet such as flexibility and elasticity are very similar before and after embossing and thermoforming.

After thermoforming, the sheet may be provided with one or more additional layers or structures at its B-side, e.g., to stabilize the thermoformed shape of the sheet.

The lacquer layer is an optional layer coating the A-side surface of the foil or the cover layer of the sheet. The lacquer layer may be based on a conventional material such as polyurethane. The thickness of the lacquer layer may preferably be 1 to 30 µm, more preferably 3 to 10 µm. The lacquer layer may be transparent.

### Examples

Samples were produced by using the following materials:
IPN (containing 50 % of high molecular weight SEBS with around 30 to 35 % of PS content, and 30 % of a UHMWPE), COPE (containing crystalline hard segments composed of multiple short-chain ester units and the amorphous soft segments derived from aliphatic polyether and polyester glycols). TPE XL and TPE were used as comparative materials. As shown in Table 1, TPE XL has some desired physical properties, however, it has a high gel content, hence a high degree of covalent crosslinking. TPE has a low gel content, however, its physical properties are disadvantageous. The results are summarized in Table 1.

**Table 1**

| Property | Sample | | | |
|---|---|---|---|---|
| | TPE XL | TPE | COPE | IPN |
| Gel content [%] | 55 | <20 | < <20 | < <20 |
| tanδ @ 130 °C | 0.27 | 0.36 | 0.12 | 0.30 |
| tanδ @ 150 °C | 0.28 | 0.42 | 0.37 | 0.30 |
| G'@ 130 °C [kPa] | 284 | 436 | 1.454 | 251 |
| G'@ 150 °C [kPa] | 197 | 237 | 302 | 189 |
| Max. creep deformation @ 2 kPa, 130 °C [%] | 2.9 | 7.2 | 3 | 3.3 |
| Slope (Plateau 100 to 300s) - Creep @ 130 °C | 0.0020 | 0.0080 | 0.0035 | 0.0071 |
| Max. creep deformation @ 2 kPa, 150 °C [%] | 4 | 21.7 | 10.2 | 5.5 |
| Slope (Plateau 100 to 300 s) - Creep @150 °C | 0.0025 | 0.0330 | 0.0200 | 0.0090 |
| Molding Grain retention @ 130 °C [Grade] | 4 | 3 | 4.8 | 3.5 |
| Molding Grain Retention @ 150 °C [Grade] | 4 | 2.5 | 4 | 1.5 |
| Grain depth after molding @ 130 °C [%] | -36 | -57 | -37 | NA |

### Dynamic mechanical analysis (DMA)

The tests were carried out by measuring the temperature sweep (40 to 230 °C, 1.95 %, 1.66 Hz;) according to ISO 6721-10:2015 to determine the shear modulus G as well as G' (shear storage modulus), G" (shear loss modulus), and tanδ (G"/G') as a measure of elasticity (tanδ<1).

When comparing TPE XL to TPE material, at the range of molding temperatures (120 °C to 150 °C), the tanδ for TPE material is always above TPE XL, and steadily increasing as temperature rises, meaning that TPE material gradually loses its elastic behavior affecting its capability to retain its original shape (grain).

For IPN based materials, the tanδ is very similar to TPE XL in the entire temperature spectrum in analysis (40 °C to 230 °C), and with similar G' and G" values, especially at molding temperatures, meaning that the foil IPN will have similar deformability compared to TPE XL material and keeping grain definition with ease.

For COPE material, tanδ is considerably lower than for TPE XL, from 40 °C to 145 °C temperature range, only surpassing the TPE XL from that last temperature, which is 5 °C below the highest molding range. From 145 °C upwards, tanδ increases sharply. In a nutshell, COPE material has very good elastic properties at molding temperatures, being only outperformed by TPE XL on the 145 °C to 150 °C range. Compared to TPE XL, COPE material presents improved grain definition at 120 °C to 140 °C but worse grain definition at 145 °C to 150 °C. Regarding G' and G", they are both above the values obtained at molding temperatures for TPE XL, meaning that stretchability of COPE material is worse than TPE XL, however, molding trials and creep analysis have shown that the modulus values are acceptable, since the material stretched with ease, and for creep analysis, the COPE material has shown similar deformation behavior (at 130 °C).

### Creep and Recovery

Creep and recovery analysis (determined according to ISO 6721-10:2015) were carried out at two different molding temperatures (130 °C and 150 °C). Generally, creep refers to the time-dependent component of plastic deformation. The results show that TPE XL has the most stable behavior with temperature increase. However, COPE shows to be comparable to TPE XL at 130 °C, the results at 150 °C are aligned with the higher tanδ value at that temperature. At 130 °C TPE XL and COPE show an outstanding elastic behavior that favors grain retention (slope is very low). IPN shows the most similar behavior to TPE XL in the two analyzed temperatures. TPE material is the worst version showing viscous behavior (higher slopes).

### Molding trials (VTF)

A foil of 50x50 cm is clamped in the thermoforming machine, and then heat is applied by radiation at a temperature set to 190 °C. A sensor measures the temperature of the foil, and when the desired temperature in the foil surface is reached (130 °C or 150 °C), the mold lifts upward and vacuum pressure is applied. The foil is then cooled by forced convection using a cooling fan. Before and after thermoforming, the grain depth is evaluated by an optical microscope with a magnification factor of 4.5. The molding grain retention is then visually rated as follows: Grade 5 - no grain loss; Grade 4.5 - light grain loss; Grade 4 - mild grain loss; Grade 3 - strong grain loss; Grade 2 - severe grain loss; Grade 1 - total grain loss.

At 130 °C, COPE shows the best molding performance, with outstanding grain definition and good stretchability. The variation of depth for COPE is slightly better than TPE XL. This performance at this temperature may be explained by the low tanδ values and low slopes of creep, where elastic behavior is predominant at this temperature. At 150 °C, COPE performs similarly to TPE XL. The decrease from 4.8 (at 130 °C) to 4 (150 °C) was expected due to the increase on the tanδ and slope (creep) at that molding temperature.

IPN material has the worst performance when considering both 130 °C and 150 °C molding trials. This is explained by when the material was grained at 200 °C, IPN still shows a predominant elastic behavior, producing a grain with very poor quality since the material will recover the imposed deformation. When the material is re-heated, the grain that was still possible to emboss, will recover its initial form (flat or no grain) related to the memory of its previous state: Elastic behavior that was cooled due to decreased polymer mobility imposed by the chill rolls of the embossing process.

The percentage of change in grain depth was determined by measuring the grain depth before molding, stretching the foil during molding to 200 % of its initial length, and measuring the grain depth after molding.

## Claims

1. A composition containing polymers, having a gel content of less than 30 %, and having at least one of the following properties (a) to (c) in a test according to ISO 6721-10:2015 at 130 °C:
(a) the tanδ is less than 0.35;
(b) the maximum creep deformation is less than 5 %;
(c) the slope of the creep is less than 0.0080 in the plateau at 100 to 300 s.

2. The composition according to claim 1, wherein the polymers are copolymers or a blend of polymers or copolymers.

3. The composition according to claim 1 or 2, wherein the polymers are a blend of a styrene-based elastomer and a thermoplastic olefin forming an interpenetrating polymer network.

4. The composition according to claim 1 or 2, wherein the polymers are polyester-based multiblock copolymers containing hard segments and soft segments.

5. A sheet consisting of a foil or comprising the foil, wherein the foil is made of the composition as described in any of claims 1 to 4 and has a gel content of less than 30 %.

6. The sheet according to claim 5, wherein the sheet is a composite structure comprising the foil as a cover layer and having at least one additional layer selected from a base layer arranged at the B-side of the cover layer and a lacquer layer coated on the A-side of the cover layer.

7. The sheet according to claim 5 or 6, wherein the sheet is an embossed sheet.

8. The sheet according to any of claims 5 to 7, wherein the sheet is an embossed sheet processed by positive thermoforming.

9. The sheet according to claim 8, wherein the sheet has not undergone a crosslinking treatment.

10. A process of producing an embossed and thermoformed sheet, comprising the steps of (i) providing the sheet as described in claim 5 or 6, (ii) embossing the sheet to obtain an embossed sheet, and (iii) positive thermoforming the embossed sheet.

11. The use of a composition as described in any one of claims 1 to 4 for preparing an embossed sheet for use in positive thermoforming.

12. The use of an embossed sheet in positive thermoforming, wherein the embossed sheet consists of or comprises a foil made of a composition as described in any one of claims 1 to 4.

13. The use of a sheet according to any one of claims 5 to 9 as a surface material in the interior of a vehicle.

## Amended claims

### Amended claims in accordance with Rule 137(2) EPC.

1. A composition containing polymers, having a gel content of less than 30 %, and having the following properties (a) and (b) in a test according to ISO 6721-10:2015 at 130 °C:
(a) the tanδ is less than 0.35;
(b) the maximum creep deformation is less than 5 %;
wherein the polymers are a blend of a styrene-based elastomer and a thermoplastic olefin forming an interpenetrating polymer network, or the polymers are polyester-based multiblock copolymers containing hard segments and soft segments; wherein the gel content is measured according to ASTM D2765-16 and comprises dissolving the composition in xylene for 24 hours at 180 °C.

2. The composition according to claim 1, wherein the composition additionally has the following property (c) in a test according to ISO 6721-10:2015 at 130 °C: (c) the slope of the creep is less than 0.0080 in the plateau at 100 to 300 s.

3. The composition according to claim 1 or 2, wherein the styrene-based elastomer is polystyrene-block-poly(ethylene-butylene)-block-polystyrene.

4. The composition according to any of the preceding claims, wherein the hard segments are short-chain ester units, and the soft segments are derived from aliphatic polyether and polyester glycols.

5. A sheet consisting of a foil or comprising the foil, wherein the foil is made of the composition as described in any of claims 1 to 4 and has a gel content of less than 30 %.

6. The sheet according to claim 5, wherein the sheet is a composite structure comprising the foil as a cover layer and having at least one additional layer selected from a base layer arranged at the B-side of the cover layer and a lacquer layer coated on the A-side of the cover layer.

7. The sheet according to claim 5 or 6, wherein the sheet is an embossed sheet.

8. The sheet according to any of claims 5 to 7, wherein the sheet is an embossed sheet processed by positive thermoforming.

9. The sheet according to claim 8, wherein the sheet has not undergone a crosslinking treatment.

10. A process of producing an embossed and thermoformed sheet, comprising the steps of (i) providing the sheet as described in claim 5 or 6, (ii) embossing the sheet to obtain an embossed sheet, and (iii) positive thermoforming the embossed sheet.

11. The use of a composition as described in any one of claims 1 to 4 for preparing an embossed sheet for use in positive thermoforming.

12. The use of an embossed sheet in positive thermoforming, wherein the embossed sheet consists of or comprises a foil made of a composition as described in any one of claims 1 to 4.

13. The use of a sheet according to any one of claims 5 to 9 as a surface material in the interior of a vehicle.
